(19) Europäisches Patentamt
European Patent Office
Office européen des brevets

(11) EP 1 280 837 B1

(12) **FASCICULE DE BREVET EUROPEEN**

(45) Date de publication et mention de la délivrance du brevet:
**02.11.2005 Bulletin 2005/44**

(21) Numéro de dépôt: **01907883.1**

(22) Date de dépôt: **23.02.2001**

(51) Int Cl.[7]: **C08F 220/18**

(86) Numéro de dépôt international:
**PCT/FR2001/000528**

(87) Numéro de publication internationale:
**WO 2001/068731 (20.09.2001 Gazette 2001/38)**

(54) **COPOLYMERES ACRYLIQUES COMME ADDITIFS POUR L'INHIBITION DU DEPOT DE PARAFFINES DANS LES HUILES BRUTES ET COMPOSITIONS LES CONTENANT**

ACRYLAT-COPOLYMERE ALS ZUSATZMITTEL FÜR DIE VERHINDERUNG DER ABLAGERUNG VON PARAFFIN IN ROHÖL UND DIESE ENTHALTENDE ZUSAMMENSETZUNGEN

ACRYLIC POLYMERS AS ADDITIVES FOR INHIBITING PARAFFIN DEPOSIT IN CRUDE OILS AND COMPOSITIONS CONTAINING SAME

(84) Etats contractants désignés:
**CH DE GB IT LI NL**

(30) Priorité: **14.03.2000 FR 0003341**

(43) Date de publication de la demande:
**05.02.2003 Bulletin 2003/06**

(73) Titulaires:
- **Institut Français du Pétrole**
  **92852 Rueil-Malmaison Cedex (FR)**
- **CECA S.A.**
  **92800 Puteaux (FR)**

(72) Inventeurs:
- **GATEAU, Patrick**
  **F-78310 Maurepas (FR)**
- **BARBEY, Annie**
  **F-78520 Dennemont (FR)**
- **BRUNELLI, Jean-François**
  **F-91850 Bouray-sur-Juine (FR)**

(56) Documents cités:
**WO-A-97/34940**
**DE-A- 1 420 219**
**FR-A- 2 128 589**
**US-A- 2 839 512**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

### Domaine technique

Le domaine technique de la présente invention est celui des huiles brutes de pétrole et des additifs destinés à en améliorer les conditions d'exploitation.

Les huiles brutes de pétrole peuvent contenir des fractions importantes de paraffines, dont la quantité et la nature exacte sont variables selon les champs d'extraction. A la température du puits les paraffines sont liquides et dissoutes dans l'huile brute. Lors de la remontée de l'huile en surface, sa température s'abaisse et les paraffines en cristallisant forment un réseau tridimensionnel d'aiguilles et d'écailles. Il en résulte une perte de fluidité qui rend la production, le transport, le stockage et même le traitement de ces huiles très difficiles. Les bouchages des pipelines et des appareils de traitement sont fréquents.

### Technique antérieure

On a proposé de nombreux procédés pour résoudre ce problème, comme le raclage mécanique ou bien le chauffage des parois. Ces procédés sont coûteux et leur mise en oeuvre n'est pas toujours possible.

Pour améliorer la rhéologie des pétroles bruts, SHELL a fait oeuvre de pionnier : son brevet FR 1.575.984 enseigne que des composés macromoléculaires de type "peignes" construits sur le modèle d'une chaîne principale hydrocarbonée sur laquelle sont greffées des chaînes latérales elles-mêmes hydrocarbonées assez longues, c'est-à-dire d'au moins 14 atomes de carbone et 30 atomes de carbone au plus, peuvent perturber la cristallisation des paraffines lourdes. Cette propriété se développe bien dans les macromolécules dont la masse moléculaire moyenne en nombre Mn (dont on rappelle la définition : $Mn = \Sigma_i NiMi / \Sigma_i Ni$, où les Mi sont les masses moléculaires des Ni espèces individuelles présentes dans le polymère) est comprise entre 1000 et 1 000 000, et de préférence entre 4000 et 100 000.

L'art antérieur a ensuite suggéré l'utilisation d'additifs, le plus souvent polymériques dont le rôle est de retarder ou de modifier la cristallisation des paraffines et de ce fait d'améliorer les propriétés d'écoulement de l'huile et d'empêcher l'agglomération des cristaux formés sur les parois.

De nombreux travaux ont ensuite essayé d'améliorer l'efficacité de ces premiers additifs de nature polymérique soit par la synthèse soit par la formulation, afin de les adapter aux différents types d'huiles brutes rencontrées, et de pallier successivement les difficultés de synthèse et/ou de manipulation des différentes générations de produits comme par exemple parmi les plus efficaces, les copolymères des acrylates $C_{18-30}$, de préférence majoritairement $C_{20-22}$, avec un monomère hétérocyclique notamment la vinylpyridine [brevets US-A-2 839 512 (1958) et FR-B-2 128 589 (1972) de SHELL].

Il a été constaté que la présence de motifs polaires confère un caractère dispersant au copolymère, qui permet d'éviter la déposition des paraffines sur les parois. Or à cause de la réactivité plus élevée des acrylates à chaîne longue par rapport à celle des comonomères polaires, l'incorporation de ces derniers est généralement très difficile et l'effet dispersant, lié au taux d'incorporation du comonomère polaire, reste donc souvent très faible.

Malgré ces améliorations successives, les additifs de l'art antérieur ne peuvent s'appliquer de manière universelle à l'ensemble des huiles brutes, chacune d'elles étant un cas particulier et posant son problème propre.

Dans la demande de brevet WO-A-97/34940, ont été proposés des inhibiteurs de paraffines particulièrement performants de type copolymères (méth-)acrylates d'alkyles ou copolymères de (méth-)acrylates d'alkyles et de vinylpyridine (2-vinylpyridine et/ou 4-vinylpyridine), mais la manipulation des vinylpyridines, particulièrement toxiques, lors de leur procédé de préparation est un frein à leur développement industriel malgré leurs excellentes propriétés inhibitrices.

### Exposé de l'invention

On vient de trouver, de façon très inattendue, des inhibiteurs de paraffines de type copolymères (méth-) acrylates d'alkyles tout aussi performants que les inhibiteurs de paraffines décrits dans la demande de brevet WO-A-97/34940 qui présentent l'avantage supplémentaire de ne pas contenir dans leur composition finale de réactif résiduel présentant des dangers de manipulation et de haute toxicité ; ces inhibiteurs de paraffines sont des copolymères d'acrylates et/ou de méthacrylates d'alkyles et de N-vinylpyrrolidone, dont une partie des motifs monomères acrylates et/ou méthacrylates d'alkyles participant à la chaîne polymère peuvent être représentés par la formule :

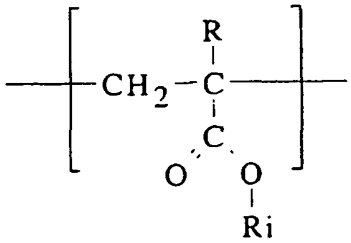

dans laquelle R est H ou $CH_3$, les Ri sont des restes d'alcools aliphatiques linéaires saturés Ri-OH, dont le nombre de d'atomes de carbone s'étend d'environ 10 à environ 50, provient d'une coupe acrylique présentant une distribution particulière des chaînes alkyles, dénommée pour les propos du présent brevet distribution "U". On entend par distribution "U" la distribution des chaînes alkyles en fonction de la longueur des chaînes, ici toutes à nombre pair de carbone, dont l'enveloppe est très régulière, dont la masse moléculaire moyenne en poids $\overline{Mw}$ est comprise entre 375 et 700, dont la masse moléculaire moyenne en nombre $\overline{Mn}$ comprise entre 375 et 840, et dont le facteur de polydispersité Pd = $\overline{Mw}$ / $\overline{Mn}$ est compris entre 1,0 et 1,2 ($\overline{Mw}$ étant la masse moléculaire en poids dont on rappelle la formule de calcul : $\overline{Mw} = \Sigma_i NiMi^2 / \Sigma_i NiMi$, où les Mi sont les masses moléculaires des Ni espèces individuelles présentes dans le polymère). La figure 1 donne une représentation de la répartition d'alkyles distribués selon une telle loi de répartition "U" avec une masse moléculaire moyenne de 425 (pour l'obtention des alcools correspondants, voir US-A-4 426 329). Les acrylates ou méthacrylates polymères obtenus par seule polymérisation de monomères à distribution "U" ne se distinguent pas particulièrement de ceux que l'on obtient à partir de monomères arbitraires, entendons par là des produits habituellement disponibles pour l'homme du métier et dans lesquels on ne recherche aucune distribution particulière des longueurs des chaînes pendantes, autrement dit dont la distribution est quelconque, en tous cas, n'est pas une distribution "U". Ce qui est très étonnant, et ce dont la demanderesse tire toutes les conséquences avantageuses, est qu'il se développe une synergie puissante quant à l'inhibition de la cristallisation des paraffines dans les huiles de pétrole, lorsque des produits de la classe "U" et de la classe "Non-U" se trouvent répartis au sein du même copolymère (méth-)acrylate /N-vinylpyrrolidone. Comme toute synergie dans des mélanges qui peuvent être fort variables en composition, les règles en sont délicates à cerner, mais les principes directeurs peuvent en être énoncés, qui seront de la plus haute utilité pour l'homme du métier : les composants "U" sont centrés sur des longueurs moyennes de chaînes pendantes $i_u$ plus fortes que celles $i_{nu}$ des composants "Non-U", et la masse dans le copolymère de l'ensemble des motifs à chaînes "U" est relativement faible par rapport à celui de l'ensemble des motifs "Non-U". Les copolymères de l'invention contiennent de 1 à 10 % de N-vinylpyrrolidone.

On notera que, dans les copolymères selon l'invention, la N-vinylpyrrolidone peut être remplacée au moins partiellement par d'autres vinyllactames, tels que le vinylbutyrolactame ou le vinylcaprolactame.

En termes de description structurale, on peut dire que font partie de l'invention les copolymères (méth-)acrylate d'alkyle / N-vinylpyrrolidone de masse moléculaire en poids $\overline{Mw}$ comprise entre 5000 et 500 000, de préférence entre 40 000 et 350 000, dont les motifs monomères acrylates ou méthacrylates qui participent à la chaîne polymère, motifs représentables par la formule

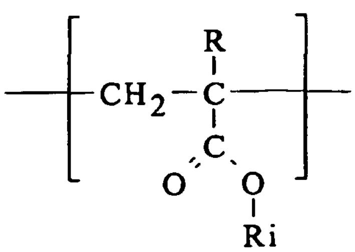

dans laquelle R est H ou $CH_3$, les Ri sont des restes d'alcools aliphatiques linéaires saturés Ri-OH où i représente le nombre d'atomes de carbone de ces restes qui est compris entre 10 et 50, suivent une loi de répartition qui est la superposition d'une loi de répartition "U", dans laquelle les i sont des nombres pairs développés sur la partie haute 24-50 de l'intervalle, dont la valeur centrée est $i_u$, et d'une loi de répartition "Non-U", dans laquelle les i sont des nombres pairs ou impairs développés sur la partie basse 10-22 de l'intervalle et dont la valeur centrée $i_{nu}$ est telle que $i_{nu} < i_u$, le rapport pondéral de l'ensemble des motifs de formule

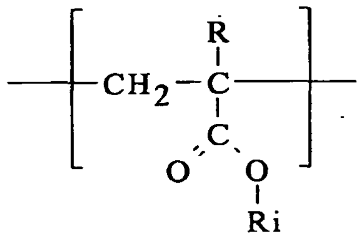

à Ri distribués selon la loi "U" à l'ensemble des motifs distribués selon la loi "Non-U" allant de 1:99 à 50:50, et préférentiellement de 5:95 à 50:50.

Les formulations d'inhibiteurs de paraffines incorporant ces copolymères comme composants essentiels pallient les inconvénients précédemment cités et permettent la réalisation d'une série d'additifs à large spectre d'utilisation et dotés d'une bonne solubilité dans les huiles brutes, lesquels ont d'ailleurs un effet aussi bien sur la cristallisation des paraffines que sur la dispersion des cristaux déjà formés. Ils retardent la cristallisation des paraffines dont la distribution se termine généralement entre C60 et C70, permettent l'abaissement du point d'écoulement et de la viscosité de ces huiles et en facilitent le transport, le stockage et le traitement. Ils s'incorporent facilement dans les huiles brutes d'origines très diverses.

**Modes de mise en oeuvre de l'invention**

Les copolymères selon l'invention peuvent être obtenus selon un procédé de polymérisation simple, peu contraignant et mettant en oeuvre des réactifs peu toxiques.

On obtient l'additif polymérique selon l'invention soit par polymérisation des monomères dans un solvant aliphatique ou aromatique de point d'ébullition inférieur à 300 °C, chimiquement inerte vis-à-vis des monomères et dans lequel tant les monomères que le copolymère sont solubles. A titre d'exemples de solvant, on peut citer le toluène, le xylène et les coupes aromatiques de points d'ébullitions centrés sur environ 190 °C. La température de polymérisation peut varier assez largement en fonction de l'initiateur radicalaire utilisé, par exemple entre 50 et 150 °C et de préférence entre 70 et 120 °C. La pression peut varier entre la pression atmosphérique et les pressions inférieures ou égales à 30 bars.

Les catalyseurs sont choisis généralement parmi les composés générateurs de radicaux libres solubles dans le milieu réactionnel comme par exemple les peroxydes organiques, tels que les peroxydes de benzoyle, d'acétyle et de ditertiobutyle, les peracides organiques ou leurs sels tels que, le perbenzoate de tertiobutyle et le peroctoacte de tertiobutyle, ou les composés azoïques comme l'azo-bis-isobutyronitrile. Ils peuvent être ajoutés au début de polymérisation ou en continu au cours de celle-ci. On utilise en général $10^{-5}$ à $10^{-1}$ mole de générateur de radicaux libres (ou amorceur radicalaire) et de préférence de $5.10^{-4}$ à $10^{-2}$ mole par mole de monomère. En masse, on peut utiliser par exemple une concentration de 0,1 à 1 % par rapport à l'ensemble des monomères.

La concentration globale en monomères dans le solvant peut aller de 10 à 90 % en masse, les concentrations préférées allant de 20 à 70 % afin de maîtriser la masse moléculaire et la pompabilité des solutions contenant l'additif polymérique. Le degré de polymérisation est mesuré par chromatographie par perméation de gel (GPC) laquelle permet d'atteindre les masses moléculaires en poids $\overline{Mw}$ et en nombre $\overline{Mn}$ en équivalent polystyrène et l'indice de polydispersité Pd du polymère.

Selon un mode préféré de préparation des copolymères de l'invention, on peut opérer comme décrit dans la demande de brevet français déposée le même jour par les mêmes déposants et ayant pour titre : « Procédé de copolymérisation d'acrylates et/ou de méthacrylates et de N-vinylpyrrolidone ».

Dans ce mode préféré, on effectue en fin de copolymérisation l'ajout d'une faible quantité d'eau et d'une petite quantité supplémentaire d'amorceur radicalaire, qui permettent d'obtenir une conversion totale de la N-vinylpyrrolidone. Par ailleurs, on a observé que, dans ces conditions, la poursuite de la polymérisation ne conduisait pas à une homopolymérisation du monomère dans la phase aqueuse, ce qui se traduirait par la présence d'insoluble dans le produit fini, la polyvinylpyrrolidone n'étant pas soluble dans les solvants aromatiques.

La quantité d'eau ajoutée est en général de 1 à 10 % en masse de la masse réactionnelle, de préférence d'environ 5 % de celle-ci. La quantité supplémentaire d'amorceur radicalaire est en général d'environ 5 à 15 % de la quantité initiale, de préférence d'environ 10 %.

La réaction est poursuivie jusqu'à conversion totale de la N-vinylpyrrolidone et des monomères acryliques. L'eau est ensuite éliminée par distillation pour conduire à une solution organique de copolymère directement utilisable, qui contient en général moins de 200 ppm de N-vinylpyrrolidone non polymérisée.

Les masses moléculaires en poids $\overline{Mw}$ et en nombre $\overline{Mn}$ des copolymères obtenus peuvent varier dans de

larges limites suivant la nature de l'huile brute à traiter, soit entre 5000 et 500 000 pour le $\overline{Mw}$, de préférence de 40 000 à 350 000, pour une polydispersité Pd pouvant varier entre 1,5 et 7,5.

**Application industrielle**

Les copolymères selon l'invention sont utilisés dans les huiles brutes à des doses pouvant varier dans de larges limites, suivant la nature, la structure et la masse moléculaire du copolymère à utiliser, la nature et la quantité de cires de paraffines présentes dans l'huile brute et la performance souhaitée en abaissement de point d'écoulement ; celles-ci peuvent varier de 5 à 5000 ppm en masse, préférentiellement de 10 à 2000 ppm. Ils ont une influence favorable sur la rhéologie des huiles brutes, en particulier sur leurs caractéristiques de viscosité en fonction de la température et du module de cisaillement, qui commande en particulier la pression nécessaire au redémarrage d'une installation (pipe-line, puits) arrêtée, sur leur point d'écoulement ou température de figeage, sur leur point de cristallisation commençante, sur leur écoulement par simple gravité, sur les dépôts qui se forment au contact de parois froides. Toutes caractéristiques fort importantes pour l'extraction, le transport et le stockage des huiles, et dont on trouvera quelques illustrations dans les tests de laboratoires destinés à apprécier l'efficacité de ces additifs.
Les compositions anti-dépôts de paraffines selon l'invention sont constituées par des solutions de ces copolymères ou additifs à des concentrations allant de 2 à 90 % en masse, préférentiellement de 20 à 70 %, dans des solvants solubles dans les huiles brutes de pétrole que l'on veut traiter et qui peuvent être avantageusement les solvants utilisés lors de la polymérisation choisis parmi les solvants aliphatiques ou aromatiques de point d'ébullition inférieur à 300 °C, et notamment le toluène, le xylène ou les coupes aromatiques de points d'ébullitions centrés par exemple sur environ 190 °C.
L'invention offre en outre à l'homme du métier, la possibilité de sélectionner par des essais de simple routine, la coupe d'alcools qui présentera la meilleure similitude avec l'huile brute à traiter et qui correspondra à la meilleure efficacité.
Les meilleurs résultats sont obtenus avec les copolymères statistiques d'acrylates d'alkyles "U" et "Non-U" et de N-vinylpyrrolidone qui renferment de 5 à 50 % de monomères "U" centrés de $C_{24}$ à $C_{50}$, les caractéristiques et l'efficacité des copolymères étant définies par le choix du couple solvant / initiateur. Les comonomères "U" préférés sont les acrylates d'alkyles centrés sur environ $C_{30}$.
Les exemples suivants illustrent l'invention.

**EXEMPLES**

On décrit ci-après les modes d'obtention conduisant à diverses compositions d'homopolymères, de copolymères ou de terpolymères pour servir d'exemples ou de contre-exemples, ainsi que les caractéristiques des copolymères obtenus, lesquelles sont regroupées plus loin dans le Tableau 1.
Dans ces exemples, les acrylates monomères "Non-U" 18-22 sont des acrylates d'alkyles à environ 18-22 atomes de carbone (commercialisés par Elf-Atochem S.A. sous le nom Norsocryl® 18-22) dont la composition en masse est

$0 < C12 - C16 < 10$ %
$0 < C16 - C18 < 40$ %
$50 < C20 - C22 < 100$ %
$0 < C24 - C30 < 10$ %

Les acrylates d'alkyles sont obtenus par les méthodes bien connues de l'homme du métier, estérification directe ou transestérification catalysée par exemple par l'acétylacétonate de zirconium.

**EXEMPLE 1**

On prépare un polymère (Polymère A) constitué de :

- 73 % en masse d'acrylates « Non-U » C18-C22,
- 15 % en masse d'acrylates « U » centré sur C30 et
- 12 % en masse de N-vinylpyrrolidone,

selon le mode opératoire détaillé ci-dessous :
Dans un réacteur de 1 litre, on introduit 321 g d'acrylates « Non-U » de n-alkyles de C18 à C22 (Norsocryl®18-22), 66 g d'acrylates « U » centrés sur C30 dont la masse moléculaire moyenne est de 477 (Norsocryl®121)

et 52,8 g de N-vinylpyrrolidone dans 360 g d'une coupe aromatique de points d'ébullitions centrés sur 190 °C. La température du réacteur est portée à 40 °C sous vide avec barbotage d'azote et maintien 30 minutes, puis à 115 °C avec maintien du barbotage d'azote. On additionne ensuite en continu sur 1 h 30 minutes, 3 g de perbenzoate de tertiobutyle. La température est maintenue après l'ajout pendant 3 heures. On introduit alors 40 g d'eau et 0,3 g de perbenzoate de tertiobutyle Le chauffage est maintenu pendant 3 heures supplémentaires avec un reflux total de l'eau. L'eau est ensuite éliminée par distillation, puis par entraînement à l'azote. Le rendement de la polymérisation est de 99,5 % en acrylate et de 99,7 % en N-vinylpyrrolidone. La solution réactionnelle contient 55 % en masse de produit actif.

**EXEMPLE 2 (comparatif)**

On prépare un polymère (Polymère B) constitué de :

- 73 % en masse d'acrylates « Non-U » C18-C22,
- 15 % en masse d'acrylates « U » centré sur C30 et
- 12 % en masse de 4-vinylpyridine,

selon le mode opératoire détaillé ci-dessous :

Dans un réacteur de 1 litre, on introduit 321 g d'acrylates « Non-U » de n-alkyles de C18 à C22 (Norsocryl®18-22), 66 g d'acrylates « U » centrés sur C30 dont la masse moléculaire moyenne est de 477 (Norsocryl®121) et 52,8 g de 4-vinylpyridine dans 360 g d'une coupe aromatique de points d'ébullitions centrés sur 190 °C. La température du réacteur est portée à 40 °C sous vide avec barbotage d'azote et maintien 30 minutes, puis à 115 °C avec maintien du barbotage d'azote. On additionne ensuite en continu sur 1 h 30 minutes, 3 g de perbenzoate de tertiobutyle. La température est maintenue après l'ajout pendant 3 heures.

**EXEMPLE 3 (comparatif)**

On prépare un polymère (Polymère C) constitué de :

- 88 % en masse d'acrylates « Non-U » C18-C22 et
- 12 % en masse de 4-vinylpyridine,

selon le mode opératoire détaillé dans l'Exemple 2 en utilisant 387,2 g de Norsocryl®18-22 et 52,8 g de 4-vinylpyridine.

**EXEMPLE 4 (comparatif)**

On prépare un polymère (Polymère D) constitué de :

- 88 % en masse d'acrylates « Non-U » C18-C22 et
- 12 % en masse de N-vinylpyrrolidone,

selon le mode opératoire détaillé dans l'Exemple 1 en utilisant 387,2 g de Norsocryl®18-22 et 52,8 g de N-vinylpyrrolidone.

Le rendement de la polymérisation est de 99,8 % en acrylate et de 99,8 % en N-vinylpyrrolidone.

**EXEMPLE 5 (comparatif)**

On prépare un polymère (Polymère E) constitué de :

- 85 % en masse d'acrylates « Non-U » C18-C22 et
- 15 % en masse d'acrylates « U » centré sur C30,

selon le mode opératoire détaillé ci-dessous :

Dans un réacteur de 1 litre, on introduit 374 g de Norsocryl®18-22 et 66 g de Norsocryl®121 dans 360 g d'une coupe aromatique de points d'ébullitions centrés sur 190 °C. La température du réacteur est portée à 40 °C sous vide avec barbotage d'azote et maintien 30 minutes, puis à 115 °C avec maintien du barbotage d'azote. On 5 additionne ensuite en continu sur 1 h 30 minutes, 3 g de perbenzoate de tertiobutyle. La température est maintenue après l'ajout pendant 3 heures.

Le Tableau 1 résume les compositions et les masses moléculaires moyennes des polymères préparés comme

décrit dans les exemples ci-dessus. Dans ce tableau, pour chaque polymère, $\overline{Mn}$ représente la masse moléculaire moyenne en nombre, $\overline{Mw}$ la masse moléculaire moyenne en poids et Pd la polydispersité, c'est-à-dire le rapport $\overline{Mw}/\overline{Mn}$.

TABLEAU 1

| | Monomères | % en masse dans le polymère | $\overline{Mn}$ | $\overline{Mw}$ | Pd |
|---|---|---|---|---|---|
| **Polymère A** | Norsocryl 18-22 | 73 | | | |
| | Norsocryl 121 | 15 | 18200 | 47700 | 2,6 |
| | NVP | 12 | | | |
| **Polymère B** | Norsocryl 18-22 | 73 | | | |
| | Norsocryl 121 | 15 | 19300 | 52100 | 2,7 |
| | 4VP | 12 | | | |
| **Polymère C** | Norsocryl 18-22 | 88 | | | |
| | 4VP | 12 | 20500 | 49200 | 2,4 |
| **Polymère D** | Norsocryl 18-22 | 88 | | | |
| | NVP | 12 | 20900 | 52200 | 2,5 |
| **Polymère E** | Norsocryl 18-22 | 85 | | | |
| | Norsocryl 121 | 15 | 17200 | 47800 | 2,8 |

**EXEMPLE 6**

On incorpore 200 ppm de chacun des copolymères A à E précédents (mis en solution dans du xylène à la concentration de 37 % en masse) à différents bruts paraffiniques. On détermine le point d'écoulement de ces solutions suivant la norme ASTM D-97.

A titre comparatif, on mesure le point d'écoulement de ces bruts additionnés de 400 ppm de ShellSWIM 5X ® (homopolymère d'acrylates d'alkyles de C18 à C22 vendu en solution dans le xylène à la concentration de 50 % en masse) commercialisé par la société SHELL OIL COMPANY comme inhibiteur de paraffines.

Les résultats sont réunis dans le Tableau 2.

TABLEAU 2

| Pétrole brut | Brut du Congo | Brut du Niger |
|---|---|---|
| Masse volumique à 22 °C (kg/m$^3$) | 861 | 813 |
| Paraffines par GC* ( %) | 11,2 | 10,8 |
| **Additif** | **Point d'écoulement (°C)** | |
| Sans | 18 | 12 |
| Polymère A | -15 | -36 |
| Polymère B | -12 | -27 |
| Polymère C | -9 | -24 |
| Polymère D | -9 | -15 |
| Polymère E | -6 | -12 |
| ShellSWIM 5X ® | +6 | -6 |

* GC : chromatographie en phase gazeuse

On constate que les compositions dispersantes selon l'invention abaissent mieux le point d'écoulement de ce pétrole brut que les compositions inhibitrices de l'art antérieur.

**EXEMPLE 7**

On traite un condensat léger caractérisé par une forte teneur en paraffines et une forte tendance à la formation de dépôts paraffineux à l'aide des compositions inhibitrices détaillées dans les Exemples 1 à 5.

Pour cela, on ajoute 400 mg de chaque composition inhibitrice par kg de condensat chauffé à 70 °C et on évalue le pouvoir anti-dépôt des compositions inhibitrices de paraffines selon le test suivant (Cold Finger Test).

Ce test consiste à peser le dépôt formé sur les parois d'une sonde métallique plongée dans une huile brute additivée ou non. La température de l'huile est généralement prise comme étant la température de fond de puits (température T1). A l'intérieur de la sonde circule un fluide dont la température T2 est régulée, et correspond aux conditions climatiques extérieures subies par les conduites ou les stockages.

L'huile brute, contenue dans un Becher de 250 ml de forme haute est homogénéisée en continu à l'aide d'un agitateur magnétique dont la vitesse est de 250 tr/min. Ce Becher est placé dans un bain thermostaté à la température T1.

La sonde métallique de diamètre extérieur 20 mm et de longueur 105 mm plonge dans l'huile sur une hauteur de 65 mm. Le fluide traversant la sonde est maintenu à la température T2 par un cryostat.

L'huile brute est chauffée à 70 °C pendant une heure, puis additivée et homogénéisée pendant 15 min à la température T1. L'huile est ensuite versée dans le Becher et la sonde est introduite, à la hauteur définie précédemment. L'agitation magnétique de l'huile est maintenue pendant toute la durée du test.

Le test dure 4 heures. La sonde est alors sortie de l'huile et maintenue quelques instants au-dessus du Becher afin de permettre son égouttage, la circulation du fluide réfrigérant étant maintenue. Le dépôt de paraffine est raclé (uniquement sur les parois verticales) et pesé avec une précision de 0,1 g.

Le résultat est exprimé en masse de dépôt pour 100 g d'huile. Pour une huile additivée, il peut être rapporté au pourcentage de dépôt de cette même huile vierge, ce qui donne une appréciation de la protection apportée par l'additif utilisé, et donc de son efficacité.

Dans cet exemple, les températures T1 et T2 sont respectivement 50 et 15 °C.

Les résultats obtenus sur ce condensat avec les différents additifs sont réunis dans le Tableau 3.

TABLEAU 3

| Additif | Protection (%) |
|---|---|
| Sans | 0 |
| Polymère A | 83 |
| Polymère B | 72 |
| Polymère C | 63 |
| Polymère D | 69 |
| Polymère E | 42 |

On constate que les compositions inhibitrices selon l'invention apportent au condensat testé une meilleure protection contre les dépôts de paraffines.

## Revendications

1. Copolymères d'acrylates et/ou de méthacrylates d'alkyles /N-vinylpyrrolidone de masse moléculaire en poids $\overline{Mw}$ comprise entre 5000 et 500 000, dont les motifs monomères acrylates et/ou méthacrylates qui participent à la chaîne polymère sont des motifs

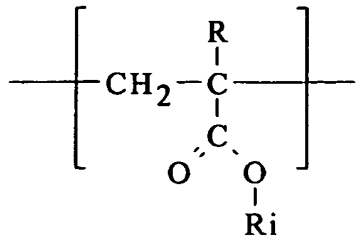

dans lesquels R est H ou CH3, les Ri sont des restes d'alcools aliphatiques linéaires saturés Ri-OH où i représente le nombre d'atomes de carbone de ces restes qui s'étale entre 10 et 50 atomes de carbone, et qui présentent la caractéristique de suivre une loi de répartition qui est la superposition d'une loi de répartition "U", dans laquelle les i sont des nombres pairs développés sur la partie haute 24-50 de l'intervalle, dont la valeur centrée est $i_u$, et d'une loi de répartition "Non-U", dans laquelle les i sont des nombres pairs ou impairs développés sur la partie basse 10-22 de l'intervalle, et dont la valeur centrée $i_{nu}$ est telle que $i_{nu} < i_u$, les restes Ri qui suivent la loi de répartition "Non-U" incluant 0<C24-C30<10%, le rapport pondéral de l'ensemble des motifs

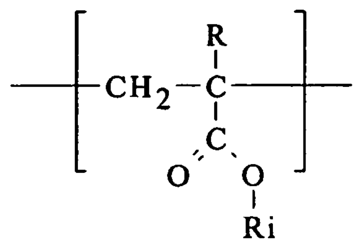

distribués selon la loi "U" à l'ensemble des motifs distribués selon la loi "Non-U" allant de 1:99 à 50:50.

**2.** Copolymères selon la revendication 1 **caractérisés en ce que** leur masse moléculaire en poids $\overline{Mw}$ est comprise entre 40 000 et 350 000.

**3.** Copolymères selon la revendication 1 ou 2 **caractérisés en ce que** le rapport pondéral de l'ensemble des motifs distribués selon la loi "U" à l'ensemble des motifs distribués selon la loi "Non-U va de 5:95 à 50:50.

**4.** Copolymères d'acrylates et/ou de méthacrylates d'alkyles selon l'une des revendications 1 à 3, comportant de 1 à 10 % de motifs N-vinylpyrrolidone, comptés en masse par rapport au copolymère.

**5.** Procédé pour l'obtention des copolymères tels que définis dans l'une quelconque des revendications 1 à 4, **caractérisé en ce que** l'on provoque la polymérisation, en présence d'un amorceur radicalaire, d'un mélange, dans le rapport pondéral approprié, de monomères dans lequel une partie des monomères esters acryliques ou méthacryliques

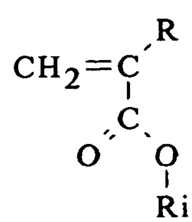

obéit à une loi de distribution "U" et la partie des monomères esters complémentaire obéit à une loi de distribution "Non-U".

**6.** Procédé selon l'une des revendications 4 et 5, **caractérisé en ce que** l'on opère dans un solvant dans lequel les monomères ainsi que le copolymère sont solubles et dont le point d'ébullition est inférieur à 300 °C.

7. Procédé selon la revendication 6, **caractérisé en ce que** le solvant est le toluène, le xylène ou une coupe aromatique de points d'ébullitions centrés sur 190 °C.

8. Procédé selon l'une des revendications 4 à 7, **caractérisé en ce que** la polymérisation est effectuée en présence d'un amorceur radicalaire utilisé à une concentration de 0,1 à 1 % en masse par rapport à l'ensemble des monomères.

9. Procédé selon l'une des revendications 4 à 8, **caractérisé en ce que**, en fin de copolymérisation, on ajoute une faible quantité d'eau et une petite quantité supplémentaire d'amorceur radicalaire.

10. Procédé selon la revendication 9 **caractérisé en ce que** la quantité d'eau ajoutée est de 1 à 10 % en masse de la masse réactionnelle.

11. Procédé selon l'une des revendications 9 et 10 **caractérisé en ce que** la quantité supplémentaire d'amorceur radicalaire est d'environ 5 à 15 % de la quantité initiale.

12. Additif destiné à abaisser le point d'écoulement d'huiles brutes de pétrole et à en améliorer le comportement rhéologique, **caractérisé en ce qu'**il est constitué de copolymères décrits dans l'une quelconque des revendications 1 à 4 et de solvant aromatique et/ou aliphatique, la concentration pondérale du copolymère dans l'additif étant comprise entre 2 et 90 %.

13. Additif selon la revendication 12 **caractérisé en ce que** la concentration pondérale du copolymère est comprise entre 20 et 70 %.

14. Composition comprenant une huile brute de pétrole et un copolymère tel que décrit dans l'une quelconque des revendications 1 à 4, dans laquelle la teneur en copolymère est comprise entre 5 et 5000 ppm.

15. Composition selon la revendication 14 dans laquelle la teneur en copolymère est comprise entre 10 et 2000 ppm.

**Patentansprüche**

1. Copolymere von Acrylaten und/oder Methacrylaten von Alkylen / N-Vinylpyrrolidon mit einer Molekularmasse in Gewicht Mw zwischen 5000 und 500000, deren Acrylat- und und/oder Methacrylatmonomermotive, welche an der Polymerkette teilnehmen, die folgenden Motive sind:

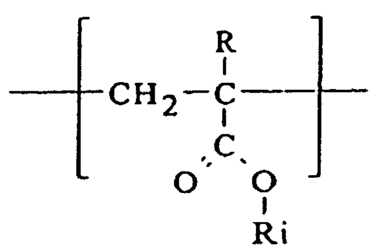

worin R H oder $CH_3$ ist, die $R_i$ aliphatische lineare gesättigte Alkholreste Ri-OH sind, wobei i die Anzahl der Kohlenstoffatome dieser Reste darstellt, die sich zwischen 10 und 50 Kohlenstoffatomen erstreckt und welche das Merkmal aufweisen, einer Verteilungsregel zu folgen, die die Überlagerung einer "U"-Verteilungsregel ist, in welcher i gerade Zahlen sind, welche im oberen Teil 24-50 des Intervalls liegen, dessen Zentralwert $i_u$ ist und einer "Nicht-U"-Verteilungsregel, in der i gerade oder ungerade Zahlen sind, die im unteren Teil 10-22 des Intervalls entwickelt sind und deren Zentralwert $i_u$ derart ist, dass $i_{nu} < i_u$, wobei die Reste Ri, die der "Nicht-U"-Verteilungsregel folgen, $0 < C_{24} - C_{30} < 10\%$ einschließen, wobei das Gewichtsverhältnis der Gesamtheit der Motive

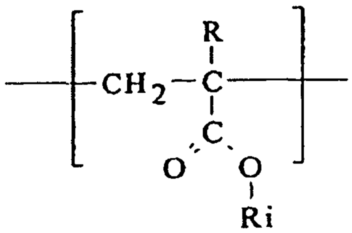

welche gemäß der "U"-Regel verteilt sind, zur Gesamtheit der Motive, welche gemäß der "Nicht-U"-Regel verteilt sind, von 1:99 bis 50:50 geht.

**2.** Copolymere nach Anspruch 1, **dadurch gekennzeichnet, dass** deren Molekularmasse in Gewicht Mw zwischen 40000 und 350000 liegt.

**3.** Copolymere nach Anspruch 1 oder 2, **dadurch gekennzeichnet, dass** das Gewichtsverhältnis der Gesamtheit der gemäß der "U"-Regel verteilten Motive zur Gesamtheit der gemäß der "Nicht-U"-Regel verteilten Motive 50: 95 bis 50:50 ist.

**4.** Copolymere von Acrylaten und/oder Methacrylaten von Alkylen gemäß einem der Ansprüche 1 bis 3, umfassend 1 bis 10% von N-Vinylpyrrolidonmotiven, gezählt im Verhältnis zur Masse an Copolymer.

**5.** Verfahren zum Erhalt der Copolymere wie in einem der Ansprüche 1 bis 4 definiert, **dadurch gekennzeichnet, dass** man die Polymerisation in Gegenwart eines Radikalstarters hervorruft, von einem Gemisch in einem geeigneten Gewichtsverhältnis von Monomeren, in welchem ein Teil der Monomere Acryl-oder Methacrylester sind

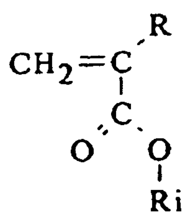

und einer "U"-Verteilungsregel gehorcht und der Teil der komplementären Estermonomere einer "Nicht-U"-Verteilrregel gehorcht.

**6.** Verfahren nach einem der Ansprüche 4 und 5, **dadurch gekennzeichnet, dass** man in einem Lösungsmittel arbeitet, in dem die Monomere sowie das Copolymer löslich sind und dessen Siedepunkt kleiner 300°C ist.

**7.** Verfahren nach Anspruch 6, **dadurch gekennzeichnet, dass** das Lösungsmittel Toluol, Xylol oder eine aromatische Fraktion mit Siedepunkten ist, die bei 190°C zentriert sind.

**8.** Verfahren nach einem der Ansprüche 4 bis 7, **dadurch gekennzeichnet, dass** die Polymerisation in Gegenwart eines Radikalstarters durchgeführt wird, der bei einer Konzentration von 0,1 bis 1 Masse-% im Verhältnis zur Gesamtheit der Monomere verwendet wird.

**9.** Verfahren nach einem der Ansprüche 4 bis 8, **dadurch gekennzeichnet, dass** am Ende der Copolymerisation man eine geringe Wassermenge und eine geringe Menge zusätzlichen Radikalstarters zugibt.

**10.** Verfahren nach Anspruch 9, **dadurch gekennzeichnet, dass** die zugegebene Wassermenge 1 bis 10 Masse-% der Reaktionsmasse ist.

**11.** Verfahren nach einem der Ansprüche 9 bis 10, **dadurch gekennzeichnet, dass** die zusätzliche des Radikalstartermenge etwa 5 bis 15% der anfänglichen Menge ist.

**12.** Zusatz, vorgesehen, um den Stockpunkt von Erdöl-Rohölen zu erniedrigen und um davon das rheologische Verhalten zu verbessern, **dadurch gekennzeichnet, dass** er aus Copolymeren besteht, die in einem der Ansprüche 1 bis 4 beschrieben sind und aromatischem und/oder aliphatischem Lösungsmittel, wobei die Gewichtskonzentration des Copolymers in dem Zusatz zwischen 2 und 90% liegt.

**13.** Zusatz nach Anspruch 12, **dadurch gekennzeichnet, dass** die Gewichtskonzentration des Copolymers zwischen 20 und 70% liegt.

**14.** Zusammensetzung, umfassend ein Erdöl-Rohöl und ein Copolymer, wie in einem der Ansprüche 1 bis 4 beschrieben, in welchem der Copolymer-Gehalt zwischen 5 bis 5000 ppm liegt.

**15.** Zusammensetzung nach Anspruch 14, bei dem der Gehalt an Copolymer zwischen 10 und 2000 ppm liegt.

## Claims

**1.** Alkyl acrylate and/or methacrylate/N-vinylpyrrolidone copolymers with a mass molecular weight $\overline{Mw}$ in the range 5000 to 500,000, wherein the acrylate and/or methacrylate monomer moieties that participate in the polymer chain are:

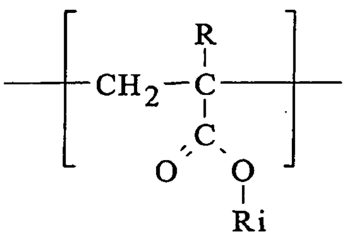

where R is H or $CH_3$, Ri are residues of saturated linear aliphatic alcohols Ri-OH where i represents the number of carbon atoms of said residues and is in the range 10 to 50 carbon atoms, and which have the characteristic of following a distribution law that is the superimposition of a "U" distribution law, where numbers i are even numbers developed over the high 24-50 portion of the interval, wherein the centred value is $i_u$, and a "non-U" distribution law where numbers i are even or odd numbers developed over the low portion 10-22 of the interval and wherein the centred value $i_{nu}$ is such that $i_{nu} < i_u$, the residues Ri that follow the "non-U" distribution law including 0 < C24-C30 < 10%, the weight ratio of the ensemble of moieties with formula:

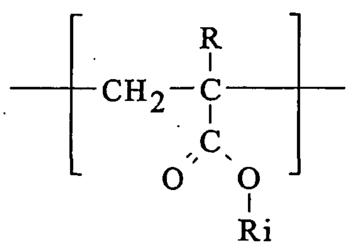

distributed in accordance with the "U" distribution law to the ensemble of moieties distributed in accordance with the "non-U" law being 1:99 to 50:50, preferably 5:95 to 50:50.

**2.** Copolymers according to claim 1, **characterized in that** their mass molecular weight $\overline{Mw}$ is comprised between 40,000 and 350,000.

**3.** Copolymers according to claim 1 or 2, **characterized in that** %, the weight ratio of the ensemble of moieties

distributed in accordance with the "U" distribution law to the ensemble of moieties distributed in accordance with the "non-U" law is from 5:95 to 50:50.

**4.** Alkyl acrylate and/or methacrylate copolymers according to anyone of claims 1 to 3, comprising 1% to 10% of N-vinylpyrrolidone moieties by weight with respect to the copolymer.

**5.** A process for producing copolymers as defmed in any one of claims 1 to 4, **characterized in that** polymerisation is caused, in the presence of a radical initiator, of a mixture of monomers in a suitable weight ratio, in which a portion of the acrylic or methacrylic ester monomers:

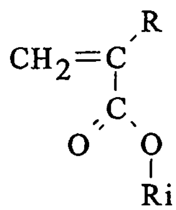

obey a "U" distribution law and the complementary portion of monomeric esters obeys a "non U" distribution law.

**6.** A process according to any one of claims 4 and 5, **characterized in that** it is carried out in a solvent in which the monomers and the copolymer are soluble and wherein the boiling point is less than 300°C.

**7.** A process according to claim 6, **characterized in that** the solvent is toluene, xylene or an aromatic cut with boiling points centred on 190°C.

**8.** A process according to any one of claims 4 to 7, **characterized in that** polymerisation is carried out in the presence of a radical initiator used in a concentration of 0.1% to 1% by weight with respect to the ensemble of monomers.

**9.** A process according to any one of claims 4 to 8 **characterized in that** at the end of the copolymerisation step, a small quantity of water and a small supplemental quantity of radical initiator are added.

**10.** A process according to claim 9, **characterized in that** the quantity of water added is 1% to 10% by weight of the reaction mass.

**11.** A process according to anyone of claims 9 and 10, **characterized in that** the supplemental quantity of radical initiator is about 5% to 15% of the initial quantity.

**12.** An additive intended to reduce the pour point of crude oils and improve rheological behaviour, **characterized in that** it is constituted by copolymers as defined in any one of claims 1 to 3 and an aromatic and/or aliphatic solvent, the concentration by weight of copolymer in the additive being in the range 2% to 90%.

**13.** An additive according to claim 12, **characterized in that** the concentration by weight of copolymer is in the range 20% to 70%.

**14.** A composition comprising a crude oil and a copolymer as defined in any one of claims 1 to 3, in which the quantity of copolymer is in the range 5 to 5000 ppm.

**15.** A composition according to claim 14, in which the quantity of copolymer is in the range 10 to 2000 ppm.

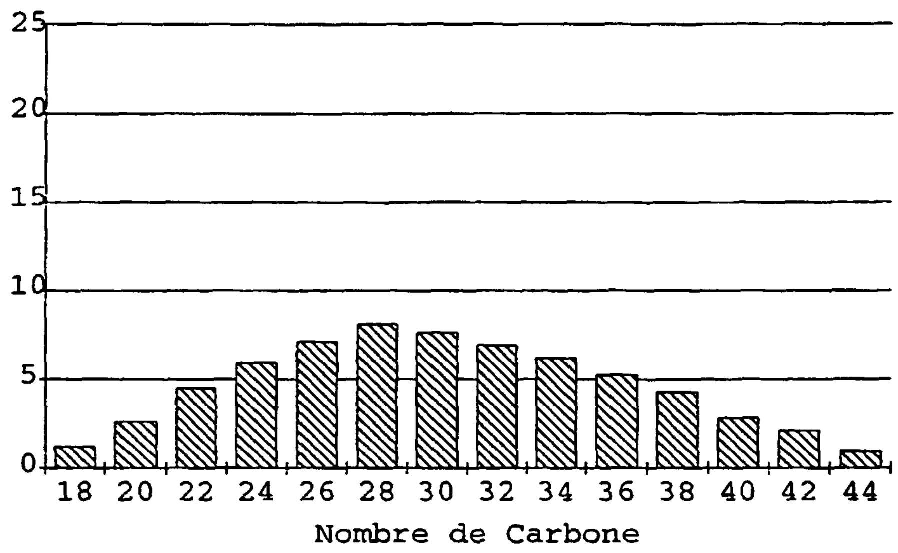
25
20
15
10
5
0
18 20 22 24 26 28 30 32 34 36 38 40 42 44
Nombre de Carbone

Fig. 1